# EUROPÄISCHE PATENTSCHRIFT

(11) **EP 0 847 507 B1**
(45) Veröffentlichungstag und Bekanntmachung des Hinweises auf die Patenterteilung: **10.11.1999**
(21) Anmeldenummer: 96928417.3
(22) Anmeldetag: 06.08.1996
(51) Int. Cl.: F16D 65/16

(54) **BREMSKOLBEN**
BRAKE PISTON
PISTON DE FREIN

(30) Priorität: 15.09.1995 DE 19534220
(43) Veröffentlichungstag der Anmeldung: 17.06.1998
(73) Patentinhaber: Continental Teves AG & Co. oHG, 60488 Frankfurt (DE)
(72) Erfinder: RÜCKERT, Helmut, D-64354 Reinheim (DE); BIRKENBACH, Alfred, D-65795 Hattersheim (DE); HENEIN, Nabil, D-64297 Darmstadt (DE)
(86) Internationale Anmeldenummer: EP9603476
(87) Internationale Veröffentlichungsnummer: WO9710450

(56) Entgegenhaltungen:
- GB-A- 1 474 286
- US-A- 4 170 926
- US-A- 4 605 104
- US-A- 4 928 579
- PATENT ABSTRACTS OF JAPAN vol. 009, no. 209 (M-407), 27.August 1985 & JP,A,60 069334 (AKEBONO BRAKE KOGYO KK), 20.April 1985,

## Beschreibung

Die Erfindung betrifft einen Bremskolben aus Kunststoff gemäß dem Oberbegriff des Patentanspruchs 1.

Aus der DE 3119921 A1 ist ein Bremskolben aus Kunststoff bekannt, dessen offenes Ende durch einen Überzug aus hitzebeständigem Material thermisch verstärkt ist. Dadurch wird eine thermische Überlastung des Bremskolbens vermieden, der an der metallischen Trägerplatte eines Bremsbelages anliegt, die während eines Bremsvorgangs sehr heiß werden kann.Die bekannte Anordnung hat den Nachteil, daß die Wärme des Bremsbelages durch den Bremskolben aufgrund seiner geringen Wärmeleitfähigkeit nur sehr schlecht abgeleitet wird. Bei einer starken Bremsung kann daher der Bremsbelag extrem heiß werden, so daß sich eventuell sogar die Belagmasse ablöst.

Innerhalb der US-A-4 170 926 wird ein Bremskolben aus Kunsstoff vorgeschlagen, wobei der topfförmige Bremskolben an seiner Innenseite eine vergrößerte Oberfläche zur stärkeren konvektiven Wärmeabfuhr an die Umgebungsluft aufweist. Zur ergänzenden Verbesserung der materialspezifischen Kolbeneigenschaften wird ebenso offenbart den Kunststoff mit verstärkenden Füllstoffen, beispielsweise metallischen Zusätzen, zu versehen. Die starke Isolierwirkung eines derartigen Bremskolbens führt wie bereits erwähnt zu einer starken Erhitzung des Bremsbelages infolge unzureichender Wärmeabfuhr.

Die US-A-4 605 104 beschreibt schließlich eine Betätigungsanordnung für eine Scheibenbremse, wobei innerhalb der Zylinderbohrung des Bremsgehäuses eine membranartige, axial elastisch deformierbare Betätigungseinheit befestigt ist. Die Betätigungseinheit besitzt dabei sowohl elastische als auch starre Bestandteile, die untereinander und mit dem Bremsgehäuse fest verbunden sind. Die beschriebene Betätigungseinheit läßt damit nur einen stark begrenzten axialen Betätigungsweg zu, ist sehr komplex aufgebaut und nicht betriebssicher bei starker Aufheizung der Bremse.

Aufgabe der Erfindung ist es, einen Bremskolben aus Kunststoff anzugeben, der hinsichtlich der Wärmeleitfähigkeit verbessert ist.

Die Lösung der Aufgabe ergibt sich aus dem kennzeichnenden Teil des Patentanspruchs 1. Erfindungsgemäß ist der Bremskolben aus Kunststoff mit einem metallischen Einsatzteil versehen, das sich von dem einen Ende des Bremskolbens, das an dem Bremsbelag anliegt, bis zu dem zweiten Ende des Bremskolbens erstreckt, das mit der Hydraulikflüssigkeit in Verbindung steht. Über das metallische Einsatzteil wird ein Teil der Wärme vom Bremsbelag abgeleitet und an die Hydraulikflüssigkeit abgegeben. Die erfindungsgemäße Lösung vereint den Vorteil der geringen Fertigungskosten für den Bremskolben aus Kunststoff mit der guten Leitfähigkeit eines metallischen Werkstoffs.

In einer einfachen Ausgestaltungsform der Erfindung besteht das Einsatzteil aus einem Metalldraht oder Bolzen, der sich im einfachsten Fall gerade von dem einen Ende des Bremskolbens bis zum zweiten Ende erstreckt. Ein derartiger Bolzen kann in den Bremskolben eingesteckt oder von dem Kunststoff umspritzt sein.

In einer zweiten Ausführungsform der Erfindung ist ein topfförmiges Einsatzteil vorgesehen, dessen Boden am zweiten Ende des Bremskolbens angeordnet ist. Der Boden des topfförmigen Einsatzteils steht direkt mit der Hydraulikflüssigkeit in Verbindung und wird von dieser mit hydraulischem Druck beaufschlagt. In einer Weiterbildung des topfförmigen Einsatzteils ist der Boden gegenüber der Seitenwand dicker ausgeführt, um dem hydraulischen Druck besser standhalten zu können. Die Erfindung kann noch verbessert werden, indem das topfförmige Einsatzteil im Bereich seiner Seitenwand mit einem innen umlaufenden Wulst versehen ist, der zum Einrasten einer Belaghaltefeder für den Bremsbelag dient.

In einer Weiterbildung der erfindungsgemäßen Ausführungsform mit topfförmigem Einsatzteil ist der topfförmige Einsatz gestuft ausgeführt. Dabei hat das bodennahe Einsatzende einen kleineren Durchmesser als das Ende, welches mit dem Bremsbelag in Berührung kommt. Der so ausgestaltete Topfeinsatz wird auf einer geringeren Bodenfläche vom Druck der Hydraulikflüssigkeit beaufschlagt und kann ihm dadurch besser standhalten.

In einer weiteren Ausführungsform der Erfindung ist vorgesehen, daß das Einsatzteil aus einem U-förmigen, umspritzten Blechstreifen oder Metalldraht besteht. Auch in diesem Fall ist auf der Innenseite des Einsatzteiles eine Erhebung vorgesehen, die von der Antiklapperfeder des Bremsbelages hintergriffen werden kann.
Insbesondere bei topfförmiger oder U-förmiger Ausbildung des Einsatzteiles sind an den Kontaktflächen von Bremskolben und Einsatzteil ineinandergreifende Nuten und Wülste an Kolben und Einsatzteil vorgesehen. Damit wird einerseits der Halt des Einsatzes im Bremskolben gefestigt und die Dichtheit des Gesamtkolbens gegenüber der Hydraulikflüssigkeit gewährleistet.

In einer weiteren bevorzugten Ausführungsform besteht das Einsatzteil aus einer umspritzten Schraubenfeder. In diesem Fall kann man ein marktübliches Standardteil verwenden.

Ausführungsbeispiele der Erfindung werden nachfolgend anhand der Zeichnungen näher erläutert.

Es zeigen:
- Fig. 1: eine geschnittene Darstellung eines Bremskolbens in einer ersten Ausführungsform mit Bolzen,
- Fig. 2: eine geschnittene Darstellung einer zweiten Ausführungsform des Bremskolbens mit topfförmigem Einsatzteil,
- Fig. 3: eine geschnittene Darstellung einer dritten Ausführungsform des Bremskolbens mit gestuftem, topfförmigem Einsatzteil,
- Fig. 4: eine geschnittene Darstellung einer vierten Ausführungsform des Bremskolbens mit U-förmigem Blechstreifen,
- Fig. 5: einen Schnitt gemäß der Linie A - A von Fig. 4,
- Fig. 6: eine geschnittene Darstellung eines Bremskolbens in einer weiteren Ausführungsform mit einer Schraubenfeder.

In den Figuren erkennt man einen Bremskolben 1, der aus Kunststoff besteht. Der Bremskolben 1 hat eine topfförmige Gestalt mit einem Bodenabschnitt 2 und einem Wandabschnitt 3. Im Inneren des Bremskolbens 1 befindet sich ein Hohlraum 4. Der Wandabschnitt 3 endet in einer Stirnfläche 5, die ein erstes Ende 6 des Bremskolbens 1 bildet und zur Anlage einer Rückenplatte eines nicht gezeigten Bremsbelages bestimmt ist. Der Bodenabschnitt 2 bildet ein zweites Ende 7 des Bremskolbens 1, das mit der Hydraulikflüssigkeit in Verbindung steht und von dieser mit hydraulischem Druck beaufschlagt wird.

Zur Verbesserung der Wärmeleitfähigkeit ist der Bremskolben 1 mit metallischen Einsatzteilen 8,9,10,11,12 versehen, die sich von seinem ersten Ende 6 bis zu seinem zweiten Ende 7 erstrecken.

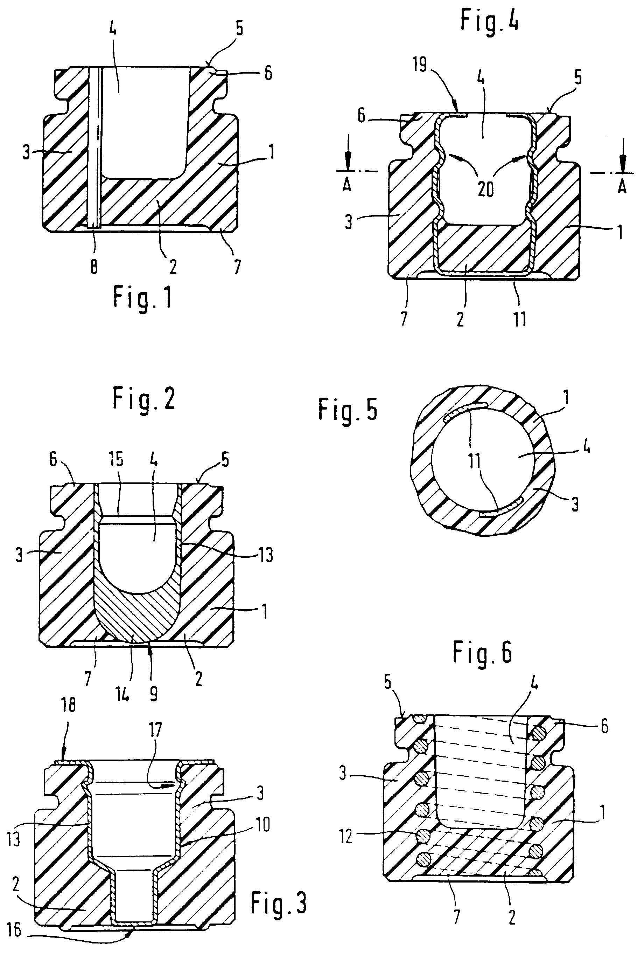

Das in Fig. 1 dargestellte Ausführungsbeispiel verwendet als Einsatzteil einen Bolzen 8, der einfach in den Bremskolben 1 eingesteckt ist. Selbstverständlich können statt eines einzigen Bolzens 8 auch beliebig viele Bolzen verwendet werden.

Bei dem in Fig. 2 dargestellten Ausführungsbeispiel ist ein topfförmiges Einsatzteil 9 in den Hohlraum 4 des Bremskolbens 1 eingesetzt, wobei eine dünne Seitenwand 13 des topfförmigen Einsatzteils 9 im Bereich des Wandabschnitts 3 des Bremskolbens 1 und ein dicker Boden 14 des topfförmigen Einsatzteils 9 im Bereich des Bodenabschnitts 2 des Bremskolbens 1 angeordnet ist. Zusätzlich ist in der Seitenwand 13 ein ringförmig umlaufender Wulst 15 ausgebildet. Der Wulst 15 ist zum Einrasten einer Antiklapperfeder des nicht gezeigten Bremsbelages bestimmt.

Fig. 3 zeigt eine Weiterbildung des topfförmigen Einsatzes 10, der gestuft ausgeführt ist. Dabei besitzt der Topfeinsatz im Bodenabschnitt 2 des Bremskolbens einen kleineren Durchmesser als im Wandabschnitt 3 des Kolbens. Dadurch ist der Einsatz mit einer verkleinerten Bodenfläche 16 dem Druck der Hydraulikflüssigkeit ausgesetzt. Im Bereich der inneren Seitenwand 13 des gestuften Einsatztopfes 10 ist umlaufend eine Nut 17 eingebracht, der obere Rand 18 des gestuften Einsatztopfes 10 ist abgewinkelt und liegt an der Stirnfläche 5 des Bremskolbens an. Dadurch wird eine vergrößerte Kontaktfläche zum nicht gezeigten Bremsbelag geschaffen.

Bei dem in den Fig. 4 und 5 dargestellten Ausführungsbeispiel besteht das Einsatzteil aus einem U-förmigen Blechstreifen 11, der teilweise im Hohlraum 4 entlang des Wandabschnitts 3 des Bremskolbens 1 und teilweise im Bodenabschnitt 2 des Bremskolbens 1 angeordnet ist. Die Abschlüsse 19 des U-förmigen Blechstreifens sind abgewinkelt und bilden die Berührungsfläche des Einsatzteiles zum nicht gezeigten Bremsbelag. Auf der Innenseite des Kolbenhohlraumes 4 besitzt der Blechstreifen 11 Vorstände 20, die von einer Antiklapperfeder eines Bremsbelages hintergriffen werden können.

Bei dem in Fig. 6 dargestellten Ausführungsbeispiel besteht das Einsatzteil aus einer Schraubenfeder 12, die in das Kunststoffmaterial des Bremskolbens 1 eingespritzt ist.

## Patentansprüche

1. Bremskolben aus Kunststoff, für eine Scheibenbremse, bei der ein erstes Ende (6) des Bremskolbens (1) an einem Bremsbelag andrückbar und ein zweites Ende (7) des Bremskolbens (1) vom Druck einer Hydraulikflüssigkeit beaufschlagbar ist, **dadurch gekennzeichnet**, daß der Bremskolben (1) mit mindestens einem Einsatzteil (8,9,10,11,12) aus einem metallischen Werkstoff versehen ist, das sich von dem ersten Ende (6) des Bremskolbens (1) bis zum zweiten Ende (7) erstreckt.

2. Bremskolben nach Anspruch 1, **dadurch gekennzeichnet**, daß als Einsatzteil mindestens ein Metalldraht oder Bolzen (8) vorgesehen ist.

3. Bremskolben nach Anspruch 1, **dadurch gekennzeichnet**, daß das Einsatzteil (9) topfförmig ist, wobei der Boden (14) des Einsatzteiles (9) am zweiten Ende (7) des Bremskolbens (1) angeordnet ist.

4. Bremskolben nach Anspruch 3, **dadurch gekennzeichnet**, daß das topfförmige Einsatzteil (9) eine dünne Seitenwand (13) und einen dicken Boden (14) aufweist.

5. Bremskolben nach Anspruch 3, **dadurch gekennzeichnet**, daß das topfförmige Einsatzteil (10) gestuft ausgeführt ist und am zweiten Ende (7) des Bremskolbens (1), der mit der Hydraulikflüssigkeit beaufschlagbar ist, einen kleineren Durchmesser besitzt als am ersten Ende (6) des Bremskolbens.

6. Bremskolben nach einem der Ansprüche 3 bis 5, **dadurch gekennzeichnet**, daß der Rand (18) des topfförmigen Einsatzteils (10) nach außen gebogen ist und an der Stirnfläche (5) des Bremskolbens (1) anliegt.

7. Bremskolben nach einem der Ansprüche 3 bis 6, **dadurch gekennzeichnet**, daß im Innern des topfförmigen Einsatzteiles (9,10) im Bereich der Seitenwand (13) umlaufend eine Wulst (15) oder eine Nut (17) ausgebildet ist.

8. Bremskolben nach Anspruch 1, **dadurch gekennzeichnet**, daß das Einsatzteil aus einem U-förmigen, umspritzten Blechstreifen (11) oder Metalldraht besteht.

9. Bremskolben nach Anspruch 8, **dadurch gekennzeichnet**, daß die Abschlüsse (19) des Einsatzteiles (11) an der Stirnfläche (5) des Bremskolbens (1), die mit dem Bremsbelag in Berührung kommt, abgewinkelt sind.

10. Bremskolben nach Anspruch 8, **dadurch gekennzeichnet**, daß das Einsatzteil (11) auf der Innenseite des Wandabschnitts (3) des Bremskolbens (1) mindestens einen vorstehenden Abschnitt (20) besitzt.

11. Bremskolben nach einem der Ansprüche 3 bis 10, **dadurch gekennzeichnet**, daß an der Berührungsfläche zwischen Bremskolben (1) und Einsatzteil (9,10,11) an Bremskolben (1) und Einsatzteil (9,10,11) ineinandergreifende Erhebungen und Einsparungen vorgesehen sind.

12. Bremskolben nach Anspruch 1, **dadurch gekennzeichnet**, daß das Einsatzteil aus einer umspritzten Schraubenfeder (12) besteht.

## Claims

1. Plastic brake piston for a disc brake, wherein a first end (6) of the brake piston (1) is adapted to be urged against a brake lining and a second end (7) of the brake piston (1) is adapted to be acted upon by the pressure of a hydraulic fluid,
**characterized** in that the brake piston (1) includes at least one insert member (8, 9, 10, 11, 12) made of a metallic material which extends from the first end (6) of the brake piston (1) to the second end (7) thereof.

2. Brake piston as claimed in claim 1,
**characterized** in that at least one metal wire or pin (8) is provided as an insert member.

3. Brake piston as claimed in claim 1,
**characterized** in that the insert member (9) has the shape of a cup, and the base (14) of the insert member (9) is arranged on the second end (7) of the brake piston (1).

4. Brake piston as claimed in claim 3,
**characterized** in that the cup-shaped insert member (9) has a thin side wall (13) and a thick base (14).

5. Brake piston as claimed in claim 3,
**characterized** in that the cup-shaped insert member (10) has a stepped design and its diameter on the second end (7) of the brake piston (1), to which hydraulic fluid can be applied, is smaller than that on the first end (6) of the brake piston.

6. Brake piston as claimed in any one of claims 3 to 5,
**characterized** in that the rim (18) of the cup-shaped insert member (10) is bent outwardly and abuts the end surface (5) of the brake piston (1).

7. Brake piston as claimed in any one of claims 3 to 6,
**characterized** in that a circumferential bead (15) or a groove (17) is provided in the inside of the cup-shaped insert member (9, 10) in the area of the side wall (13).

8. Brake piston as claimed in claim 1,
**characterized** in that the insert member is configured as a U-shaped spray-coated sheet-metal strip (11) or a metal wire.

9. Brake piston as claimed in claim 8,
**characterized** in that the ends (19) of the insert member (11) are angled off at the front surface (5) of the brake piston (1) which moves into contact with the brake lining.

10. Brake piston as claimed in claim 8,
**characterized** in that the insert member (11) includes at least one projection (20) on the inside of the wall portion (3) of the brake piston (1).

11. Brake piston as claimed in any one of claims 3 to 10,
**characterized** in that the contact surface between the brake piston (1) and the insert member (9, 10, 11) includes beads and grooves on the brake piston (1) and the insert member (9, 10, 11) which are in engagement.

12. Brake piston as claimed in claim 1,
**characterized** in that the insert member is a spray-coated helical spring (12).

## Revendications

1. Piston de frein en matière plastique, pour frein à disque, dans lequel une première extrémité peut être appliquée en appui sur une garniture de frein et une seconde extrémité (7) du piston de frein (1) peut être soumise à l'action de la pression d'un liquide hydraulique, caractérisé en ce que le piston de frein (1) est pourvu d'au moins une pièce d'insertion (8, 9, 10, 11, 12) en matière métallique, qui s'étend de la première extrémité (6) du piston de frein (1) à la seconde extrémité (7).

2. Piston suivant la revendicationl, caractérisé en ce qu'il est prévu, en tant que pièce d'insertion, au moins un fil métallique ou une tige (8).

3. Piston de frein suivant la revendication 1, caractérisé en ce que la pièce d'insertion (9) est en forme de dé, le fond (14) de la pièce d'insertion (9) étant disposé à la seconde extrémité (16) du piston de frein (1).

4. Piston de frein suivant la revendication 3, caractérisé en ce que la pièce d'insertion (9) en forme de dé comporte une paroi latérale mince (13) et un fond épais (14).

5. Piston de frein suivant la revendication 3, caractérisé en ce que la pièce d'insertion (10) en forme de dé est étagée et comporte, à la seconde extrémité (7) du piston de frein (1) qui peut être soumise à l'action du liquide hydraulique, un diamètre plus petit qu'à la première extrémité (6) du piston de frein.

6. Piston de frein suivant l'une des revendications 3 à 5, caractérisé en ce que le bord (18) de la pièce d'insertion (10) en forme de dé est plié vers l'extérieur et prend appui sur la surface frontale (5) du piston de frein (1).

7. Piston de frein suivant l'une des revendications 3 à 6, caractérisé en ce qu'un bourrelet (15) ou une gorge (17) est réalisé à l'intérieur de la pièce d'insertion (9,10) en forme de dé, dans la zone de la paroi latérale (13) qui en fait tout le tour.

8. Piston de frein suivant la revendication 1, caractérisé en ce que la pièce d'insertion est constituée d'une bande de tôle(11) ou d'un fil métallique en forme de U et enrobé à l'injection.

9. Piston de frein suivant la revendication 8, caractérisé en ce que les terminaisons (19) de la pièce d'insertion (11) sont coudées sur la face frontale (5) du piston de frein (1) qui vient au contact de la garniture de frein.

10. Piston de frein suivant la revendication 8, caractérisé en ce que la pièce d'insertion (11) comporte, sur la face intérieure de la section de paroi (3) du piston de frein (1), au moins une section (20) en saillie.

11. Piston de frein suivant l'une des revendications 3 à 10, caractérisé en ce que, sur la surface de contact entre le piston de frein (1) et la pièce d'insertion (9, 10, 11), des parties en surépaisseur et des parties en retrait s'engageant les unes dans les autres sont prévues sur le piston de frein (1) et la pièce d'insertion (9, 10, 11).

12. Piston de frein suivant la revendication 1, caractérisé en ce que la pièce d'insertion est constituée d'un ressort hélicoïdal (12) enrobé à l'injection.
